# EUROPÄISCHE PATENTSCHRIFT

(11) **EP 3 961 479 B1**
(45) Veröffentlichungstag und Bekanntmachung des Hinweises auf die Patenterteilung: **12.03.2025**
(21) Anmeldenummer: 20193251.4
(22) Anmeldetag: 28.08.2020
(51) Int. Cl.: G06F 18/2413, G06V 10/50, G06V 20/56

(54) **VERFAHREN UND VORRICHTUNG ZUR KLASSIFIZIERUNG VON TARGETS**
METHOD AND DEVICE FOR CLASSIFYING TARGETS
PROCÉDÉ ET DISPOSITIF DE CLASSIFICATION DE CIBLES

(43) Veröffentlichungstag der Anmeldung: 02.03.2022
(73) Patentinhaber: MicroVision, Inc., Redmond, WA 98052 (US)
(72) Erfinder: NITSCH, Julia, 22143 Hamburg (DE); FELLENBERG, Christian, 22143 Hamburg (DE); POSEWSKY, Thorbjörn, 22143 Hamburg (DE); ERDMANN, Jennifer, 22143 Hamburg (DE); HOFSÄß, Cornelia, 22143 Hamburg (DE)
(74) Vertreter: RGTH

(56) Entgegenhaltungen:
- US-A1- 2019 324 147
- SERGIO HERNANDEZ-MARIN ET AL: "Bayesian Analysis of Lidar Signals with Multiple Returns", IEEE TRANSACTIONS ON PATTERN ANALYSIS AND MACHINE INTELLIGENCE, IEEE COMPUTER SOCIETY, USA, vol. 29, no. 12, 5 November 2007 (2007-11-05), pages 2170 - 2180, XP011195551, ISSN: 0162-8828, DOI: 10.1109/TPAMI.2007.1122

## Beschreibung

Die vorliegende Erfindung betrifft ein Verfahren sowie eine Vorrichtung zur Klassifizierung von Targets nach den unabhängigen Ansprüchen.

### Stand der Technik

Aus dem Stand der Technik ist bekannt, optische Distanzmessungen mit Lidar-Sensoren durchzuführen. Diese beruhen auf dem sogenannten Time-of-Flight-Prinzip. Dabei wird ein scannender Sensor eingesetzt, der periodisch Pulse aussendet. Die Pulse werden von Targets reflektiert, wobei die reflektierten Pulse detektiert werden. Aus der Bestimmung der Laufzeit der Pulse von dem Sensor zu dem Target und zurück kann mit Hilfe der Lichtgeschwindigkeit auf die Distanz zu diesem Target geschlossen werden. Bei dem Target kann es sich um Objekte, bspw. Menschen oder Gegenstände, handelt oder um eine Umweltbedingung, bspw. Nebel. Im Stand der Technik ist es stets das Ziel Objekte zuverlässig zu erkennen.

Um nun eine Objekterkennung und Abstandsschätzung durchzuführen, werden üblicherweise Klassifikatoren mit den Sensordaten trainiert. Das Ergebnis ist die positionsabhängige Schätzung von Objekten. Der Nachteil der bekannten Signalverarbeitungskette ist der hohe Rechenaufwand, der für die einzelnen Verarbeitungsschritte nötig ist. Besonderer Rechenaufwand kommt durch die Berechnungen in 3D zustande, da hier die Problemkomplexität naturbedingt höher ist.

Aktuelle Lösungen benutzen daher vereinfachte Modelle und Filteransätze, um Rauschen herauszufiltern und nur gültige Erkennungen zu melden. Dabei ergibt sich allerdings das Problem, dass die Pulse sowohl an Objekten als auch an Umweltbedingungen wie beispielsweise Regen oder Nebel reflektiert werden. Dadurch, dass die Systeme aus dem Stand der Technik nicht dazu geeignet sind, Reflektionen von validen Objekten und von entsprechenden Umweltbedingungen zu unterscheiden, kann es zu Fehldetektionen kommen, die dann zu potenziell gefährlichen Reaktionen eines Fahrzeuges, das auf Basis dieser Informationen autonom oder teilautonom fährt, führen können.

US 2019/324 147 A1 beschreibt ein LIDAR-System zur Benutzung in einem Fahrzeug.

### Darstellung der Erfindung: Aufgabe, Lösung, Vorteile

Der vorliegenden Erfindung liegt somit die Aufgabe zugrunde, ein Verfahren und eine Vorrichtung zur Klassifizierung von Targets derart zu verbessern, dass der Rechenaufwand reduziert wird und eine semantische Segmentierung beziehungsweise Targeterkennung eines Umfeldes eines Fahrzeuges ermöglicht wird. Insbesondere soll unterschieden werden, ob es sich bei einem Target um ein Objekt oder eine Umweltbedingung handelt.

Gelöst wird die vorgenannte Aufgabe durch ein computerimplementiertes Verfahren zur Klassifizierung von Targets, das das Extrahieren von Merkmalen aus Messdaten mehrerer Empfangselemente eines Sensors mittels eines neuronalen Netzwerkes oder mittels eines Gaussian Mixture Models (GMM) umfasst. Es handelt sich bei den Messdaten jedes Empfangselementes des Sensors um einen Abschnitt oder mehrere Abschnitte des jeweiligen Photonhistogramms. Bei dem neuronalen Netzwerk handelt es sich um ein fully connected neuronales Netzwerk (FCN) oder ein convolutional neuronales Netzwerk (CNN). Ferner können die obigen Schritte hinsichtlich sämtlicher Empfangselemente des Sensors durchgeführt werden.

Das neuronale Netzwerk oder das GMM ist insbesondere dazu ausgebildet, Muster in den Messdaten zu erkennen. Unter einem Muster sind insbesondere Erhöhungen, sogenannte Peaks, zu verstehen. Das neuronale Netzwerk beziehungsweise das GMM ist insbesondere dazu in der Lage, die Form von Peaks zu analysieren. Insbesondere dienen das GMM beziehungsweise die neuronalen Netzwerke dazu, die entsprechende Verteilung, die einer Erhöhung zugrunde liegt, zu modellieren und somit auszuwerten. Das neuronale Netzwerk oder das GMM können bspw. die steigende und/oder abfallende Flanke und dessen Steigung und/oder dessen Kurvenverlauf, bspw. exponentiell, erkennen. Auch die Breite des Peaks wird erkannt.

Das FCN umfasst insbesondere mindestens einen fully connected Layer. Jedes Layer enthält eine Vielzahl von künstlichen Neuronen. Das FCN modelliert insbesondere nicht-lineare Funktionen. Das FCN ist dazu ausgebildet, entsprechende nicht-lineare Funktionen direkt in dem mindestens einen Abschnitt des jeweiligen Photonhistogramms, und somit in den Rohdaten des Sensors, zu erkennen. In anderen Worten versucht das FCN nicht-lineare Funktionen anhand der Eingangswerte, nämlich der Werte des jeweiligen Photonhistogramms, zu erkennen, die den gewünschten Ausgangswerten der nicht-linearen Funktionen entsprechen. Das FCN umfasst insbesondere mindestens einen fully connected-Layer, insbesondere mehrere fully connected-Layer. Insbesondere umfasst das FCN mindestens fünf, vorzugsweise mindestens zehn, insbesondere mindestens 15, Layer.

Das CNN umfasst insbesondere mindestens einen convolutional Layer. Jedes Layer enthält eine Vielzahl von künstlichen Neuronen. Insbesondere kann jedes Layer des CNN als convolutional Layer ausgebildet sein. Ein convolutional Layer führt insbesondere eine Faltung durch. Insbesondere umfasst das CNN mindestens zwei, vorzugsweise mindestens drei, insbesondere mindestens 5, convolutional Layer. Aktiviert sind alle Layer (bis auf vorzugsweise den letzten Layer) jeweils vor allem durch eine nicht-lineare Funktion, insbesondere eine sogenannte ReLU-Funktion. Dabei handelt es sich bei der ReLU-Funktion um eine Rectified Linear Unit. In anderen Worten handelt es sich um eine Funktion, die im positiven X-Bereich linear ausgebildet ist, jedoch im negativen X-Bereich 0 ist, wobei X für einen Eingangswert eines Neuronen steht. Das letzte Layer hat vorzugsweise keine Aktivierungsfunktion, um als letzten Schritt sämtliche Zahlenwerte zuzulassen.

Ferner kann das CNN ein oder mehrere pooling Layer umfassen. Insbesondere ist nach jedem convolutional Layer ein pooling layer angeordnet. Ein pooling layer dient dazu die Dimension des Outputs, der an das nachfolgende Layer weitergegeben wird, zu reduzieren. Insbesondere sind die pooling Layer derart ausgebildet, dass sie "max pooling" durchführen, in anderen Worten immer nur den maximalen Wert eines Vielzahl von Outputwerten nimmt und an das nachfolgende Layer weiter geben.

Außerdem kann das CNN mindestens einen, insbesondere zwei, fully connected Layer umfassen. Auch kann das CNN mindestens ein dropout Layer umfassen. Insbesondere ist das Netzwerk derart aufgebaut, dass zwischen zwei fully connected Layern ein dropout Layer angeordnet ist.

FCN und CNN sind leicht zu implementieren. Die extrahierten Merkmale eines CNN sind invariant gegenüber Transitionen und Rotationen, sodass leichte Verschiebungen oder Drehungen, die den Input, d.h. des jeweiligen Photonhistogramms, beeinflussen können, nicht stören.

Das GMM ist insbesondere eine Funktion, die aus verschiedenen Funktionen besteht. Dabei können mindestens eine, mehrere oder sämtliche dieser Funktionen Gauß-Funktionen sein. Das GMM dient dazu, die Peak-Form zu modellieren und somit auszuwerten. In anderen Worten ermittelt das GMM eine analytische Beschreibung des Histogramms. Das GMM wird insbesondere unüberwacht gefittet. GMM sind sehr gut mit jeder Art von Klassifikationseinheit kombinierbar.

Bei den mehreren Empfangselementen kann es sich insbesondere um Avalanche-Photodetektoren, beispielsweise um Single-Photon-Avalanche-Dioden, SPAD, handeln.

Jedes Photonhistogramm ist erfindungsgemäß als eindimensionaler Array ausgebildet. In anderen Worten handelt es sich bei einem Photonhistogramm um Werte, in anderen Worten Zahlen, die in sogenannte Bins eingetragen sind. Ein Bin ist ein Abschnitt eines zuvor definierten Messintervalls. Die Werte des jeweiligen Photonhistogramms sind insbesondere die Anzahl der detektierten Photonen in dem jeweiligen Bin.

Es handelt sich bei dem Sensor insbesondere um einen Solid-State-Lidar-Sensor, wobei das Verfahren das Durchführen von Lichtlaufzeitmessungen für mindestens ein definiertes Messintervall mittels des Sensors umfasst, und wobei das Verfahren das Erstellen eines jeweiligen Photonhistogramms pro Messintervall basierend auf den Lichtlaufzeitmessungen umfasst.

Lichtlaufzeitmessungen basieren auf dem Time-of-Flight-Prinzip. Es sendet somit mindestens ein Sendeelement, vorzugsweise mehrere Sendeelemente, einer Sendeeinheit, vorzugsweise eines Lasers, des Sensors mindestens einen Messpuls aus, wobei jedes Sendeelement der Sendeeinheit jeweils einem Empfangselement des Empfangselements zugeordnet ist. Ferner sind die Paare der Sendeelemente und Empfangselemente jeweils einem Sektor eines Sichtfeldes des Sensors zugeordnet. Das Sichtfeld kann somit basierend auf den Sendeelementen und Empfangselementen in verschiedene Sektoren eingeordnet werden. Durch das Time-of-Flight-Prinzip und der zuvor beschriebenen örtlichen Zuordnung jedes Empfangselementes zu einem Sektor des Sichtfeldes kann somit ein Abstand zu einem Reflektionspunkt eines Targets, an dem ein Puls reflektiert wurde, und die Position des Reflektionspunktes bestimmt werden.

Dabei müssen innerhalb eines Messintervalls nicht immer sämtliche Sendeelemente mindestens einen Messpuls versandt haben. Es kann beispielsweise ein Interessenbereich, ein Region of Interest, des Sichtfeldes ausgemessen werden, wozu ein Bereich der Sendeeinheit und somit eine Gruppe von Sendeelementen, mindestens einen Sendepuls aussenden, sodass auch nur eine Gruppe von Empfangselementen entsprechende reflektierte Pulse empfängt. Die Definition des Messintervalls wird insbesondere durch die sogenannte Frame-Rate bestimmt. Innerhalb eines Messintervalls wird somit zumindest ein Abschnitt des Sichtfeldes ausgeleuchtet. Es kann somit innerhalb eines Messintervalls ein Einzelbild, in anderen Worten Frame, zumindest eines Abschnitts des Sichtfeldes entstehen.

Das Erstellen jedes Photonhistogramms umfasst insbesondere eine zeitkorrelierte Einzelphotonenzählung. Insbesondere wird ein Photonhistogramms pro Messintervall und pro Empfangselement erstellt. Die Messdaten, die dem neuronalen Netzwerk oder dem GMM bereitgestellt werden, umfassen somit keine Messdaten, die Reflektionen aus dem Sichtfeld des Sensors über eine Zeitspanne hinweg beobachten, die über das Messintervall hinausgehen.

Insbesondere werden über das zuvor definierte Messintervall die einzelnen Detektionen von Photonen eines Empfangselementes über die Zeit bis zum Ablauf des Messintervalls akkumuliert. Dies wird insbesondere für jedes Empfangselement durchgeführt.

Es wird für jedes detektierte Photon mit Hilfe des Time-of-Flight-Prinzips der Abstand zum entsprechenden Reflektionspunkt bestimmt. Dabei ist das Messintervall in unterschiedliche, vorzugsweise gleich lange, Abschnitte (Bins) eingeteilt, die aufgrund des Time-of-Flight-Prinzipes verschiedene Abstandsbereiche zum Sensor präsentieren. In die Bins werden nun die ermittelten Abstände der detektierten Photonen eingetragen. Jedem Bin wird somit die Anzahl der Detektionen im jeweiligen Bin (d.h. basierend auf einer Reflektion an einem Reflektionspunkt innerhalb des zugeordneten Abstandsbereich) zugeordnet.

Das Photonhistogramm repräsentiert eine Verteilung der Detektionen über die Zeit des Messintervalls beziehungsweise über den Abstand des Entfernungsbereichs, der durch das Messintervall abgedeckt wird. Die Struktur der Verteilung ist abhängig vom realen Abstand des detektierten Targets, vom Target selbst, bspw. der Reflektivität dessen Oberfläche, sowie vom Winkel des Targets. Die Werte der Detektionen bezogen auf die einzelnen Bins stellt das Photonhistogramm dar. Auf die oben beschriebene Weise wird für jedes Empfangselement, das mindestens einen Messpuls empfangen hat, ein Photonhistogramm erhalten. Da jedem Empfangselement ein Sektor in Bezug auf das Sichtfeld zugeordnet ist, kann man unter Heranziehung der in dem jeweiligen Photonhistogramm erhaltenen Abstandinformationen ein Histogramm mit 3D-Ortsinformationen für das Sichtfeld ermitteln. Bei einem Target handelt es sich vor allem um ein Objekt oder eine Umweltbedingung.

Der Sensor umfasst neben der Sendeeinheit eine Empfangseinheit, die die Empfangselemente aufweist. Die Sendeeinheit ist dazu ausgebildet entweder periodisch oder zufällig Pulse auszusenden, die von einem Target im Sichtfeld des Sensors reflektiert werden. Bei der Sendeeinheit handelt es sich vor allem um eine Sendematrix und bei der Empfangseinheit insbesondere um eine Empfangsmatrix. Dabei können die Sendeelemente und die Empfangselemente regelmäßig in einem regelmäßigen Muster, beispielsweise einem gleichmäßigen Gitterraster, auf den entsprechenden Matrizen angeordnet sein. Die Empfangsmatrix ist insbesondere als SPAD-Array ausgebildet. SPADs sind Halbleiterdioden, die den Effekt des Lawinendurchbruchs (Avalanche-Durchbruch) ausnutzen. SPADs weisen eine sehr hohe Empfindlichkeit und eine hohe zeitliche Auflösung auf. Es können in Avalanche-Dioden Bereiche hoher elektrischer Feldstärke erzeugt werden, in denen sich die Anzahl der freien Ladungsträger im Leitungs- oder Valenzband durch Stoßionisation vervielfältigt und oberhalb der Durchbruchspannung lawinenartig ansteigt. So ist es möglich ein einziges Photon in einem kleinen Messvolumen zu detektieren.

Bei den Photonhistogrammen handelt es sich somit um die Rohdaten des Sensors. Durch die direkte Verarbeitung der Photonhistogramme wird ein größerer Informationsgewinn erreicht. Beispielsweise können Bereiche von besonderem Interesse (regions of Interest) sowie Targets, insbesondere Objekte, erkannt werden, die mit bekannten Methoden nicht oder lediglich mit deutlich höherem Aufwand bestimmbar sind. Die Verwendung eines neuronalen Netzwerkes beziehungsweise eines GMM bietet die Möglichkeit, den vorhandenen Informationsgehalt effizienter zu nutzen. Dadurch wird ein genauerer und umfassender Eindruck des Sichtfeldes des Sensors erhalten.

Insbesondere ist der Sensor an einem Fahrzeug angeordnet, wobei das Verfahren dazu dient, Targets, die sich in der Umgebung des Fahrzeuges befinden, zu erkennen und zu klassifizieren. Es wird somit ein vorteilhafterer Eindruck des Fahrzeugumfeldes erhalten, wobei der Rechenaufwand reduziert wird, um eine semantische Segmentierung, insbesondere Target- bzw. Objekterkennung, des Umfeldes zu ermöglichen. Unter dem Begriff "semantische Segmentierung" ist zu verstehen, dass das Sichtfeld in Bereiche segmentiert werden kann, die ein Target enthalten. Es werden Punkte eines Target sowie dessen Distanz nicht nur basierend auf der Messung hinsichtlich des einen Punktes sondern unter Berücksichtigung der Messungen benachbarter Punkte ermittelt.

Insbesondere ist es möglich, das neuronale Netzwerk oder das GMM auf einem ASIC des Sensors zu realisieren. Auf diese Weise wird eine Segmentierung und/oder Vorverarbeitung für nachfolgende ADAS-Algorithmen (ADAS = Advanced-Driver-Assistance-Systems) bereits auf dem ASIC des Sensors realisierbar.

Insbesondere für das CNN kann das Verfahren das Umwandeln des Histogramms von einem eindimensionalen Array in ein 2D-Bild umfassen. Dabei wird der eindimensionale Array insbesondere in eine 2D-Repräsentation umgewandelt. In anderen Worten werden die Werte, die den entsprechenden Bins zugeordnet sind, nicht als Zahlenwerte repräsentiert, sondern entsprechend ihres Zahlenwertes als "Säule" dargestellt. So ergibt sich eine Art Säulendiagramm ohne Trennlinien zwischen den einzelnen Säulen bzw. Bins, das ein 2D-Bild darstellt.

Das CNN ist in der Lage Input in Form des 2D-Bildes zu verarbeiten. In anderen Worten modelliert das CNN visuelle Merkmale, beispielsweise Linien, Kanten, Ecken, etc. und erkennt diese im 2D-Bild wieder. Das CNN ist dazu ausgebildet in den ersten Layern einfache Merkmale, wie beispielsweise Linien in jeder Orientierung, zu extrahieren und je tiefer das Netzwerk wird, desto komplexer werden die Merkmale, die extrahiert werden, beispielsweise L-Features, Kreisfeatures, Sternfeatures oder hochdimensionale Features. Ein besonderer Vorteil des CNNs ist, dass dieses invariant gegen leichte Verschiebungen ist, die das zweidimensionale Bild, beeinflussen. Ferner kann das CNN auch Input in Form eines eindimensionalen Arrays verarbeiten.

Ferner können CNNs die Nachbarschaftsbeziehungen mit einbeziehen. Es ist somit eine semantische Segmentierung möglich. In anderen Worten können CNNs als Filterbänke verstanden werden, die 2D-Filter implementieren. Diese Filter werden über das 2D-Bild geschoben und somit eine Faltung durchführen. Das CNN operiert auf dem gesamten 2D-Bild, kann jedoch Nachbarschaftsbeziehungen berücksichtigen. Das CNN berücksichtigt somit nur Nachbarpixel und verknüpft nicht jegliche Pixel miteinander. Ein besonderer Vorteil der CNNs ist, dass sie direkt geometrische Merkmale modellieren können. Da zwischen den benachbarten Empfangselementen eine Beziehung besteht, kann eine robustere Erkennung und Klassifizierung von Targets, vor allem Objekten, erreicht werden. Auch GMM operieren auf der Gesamtheit eines Peaks, da versucht wird die Funktion auf den gesamten Peak anzupassen, sodass auch hier Nachbarschaftsbeziehungen berücksichtigt werden.

Erfindungsgemäß umfasst das Verfahren das Bereitstellen der Messdaten für das neuronale Netzwerk oder das GMM, wobei mittels des Verfahrens ein oder mehrere Abschnitte des jeweiligen Photonhistogramms bereitgestellt wird, wobei jeder Abschnitt genau einen Peak umfasst. Das Verfahren umfasst eine Auswahl eines Abschnittes oder mehrerer Abschnitte des jeweiligen Photonhistogramms pro Messintervall und pro Empfangselement. Es wird der Abschnitt oder die Abschnitte so gewählt, dass jeweils nur ein Peak enthalten ist. In anderen Worten besteht jeder Abschnitt aus einem jeweiligen Peak. Es wird für jeden Peak ein Abschnitt bereitgestellt. In anderen Worten wird die Information des jeweiligen Photonhistogramms auf die Abschnitte reduziert, die Peaks darstellen, und somit auf das Wesentliche reduziert.

Da nur Abschnitte der Photonhistogramme mit Peaks bereitgestellt werden, kann die Komplexität des Netzwerkes oder des GMM verringert werden, da diese weniger Informationen verarbeiten müssen. Ferner können Informationen, in anderen Worten, aus dem Peak ermittelt werden, die durch klassische Signalverarbeitung bisher nicht extrahiert werden konnten, da in diese ein höherer Rechenaufwand gesteckt werden kann.

Der Output des neuronalen Netzwerks beziehungsweise des GMM sind insbesondere Merkmale, insbesondere in Form von Tensoren, das heißt mehrdimensionalen Vektoren. Ferner können die Merkmale hinsichtlich der GMM als Merkmale der entsprechenden verwendeten Funktionen, beispielsweise Gauß-Funktionen, vorliegen, beispielsweise dem Mittelwert oder der Standardabweichung.

Erfindungsgemäß beschreiben die extrahierten Merkmale Formen der Peaks der Photonhistogramme.

Insbesondere umfasst das Verfahren das Erkennen von Targets, vor allem Objekten, basierend auf den extrahierten Merkmalen. Erfindungsgemäß umfasst das Verfahren das Klassifizieren der Targets, insbesondere Objekten, basierend auf den zuvor extrahierten Merkmalen, nämlich einer Form der Peaks. Eine Klassifizierung bedeutet insbesondere bei einem Objekt eine Zuordnung von mindestens einer Objektklasse, insbesondere genau einer Objektklasse, zu einem erkannten Objekt. Beispiele für Objektklasse sind insbesondere Mensch, Fahrrad, Motorrad, PKW, LKW, Baum oder Straßenschild. Insbesondere erfolgt das Klassifizieren mittels eines neuronalen Netzwerkes, wobei das neuronale Netzwerk als fully connected neuronales Netzwerk (FCN) ausgebildet sein kann. Ferner kann das Klassifizieren mittels einfacher, linearer oder nicht-linearer Layer erfolgen.

Das Verfahren kann das Erkennen einer Umweltbedingung umfassen. Vor allem wird eine Aussage über eine Umweltbedingung, insbesondere über eine Wetterbedingung, und zwar im entsprechenden Sichtfeld des Empfangselementes des Sensors, ermittelt.

Die Aussage kann das Vorliegen der Umweltbedingung und/oder die Art der Umweltbedingung und/oder die Stärke der Umweltbedingung betreffen.

Die Aussage kann betreffen, dass grundsätzlich eine Umweltbedingung vorliegt. Das Verfahren kann Erhöhungen unterscheiden, und zwar derart, ob eine Erhöhung von der Reflektion an einem tatsächlichen Objekt ausgeht oder von einer Reflektion an einer Umweltbedingung, beispielsweise Nebel, Schnee oder Regen, stammt. Dabei handelt es sich um Umweltbedingungen im unmittelbaren Umfeld des Fahrzeuges.

Ferner kann die Aussage betreffen, welche Umweltbedingung bspw. Regen, Schnee oder Nebel, vorliegt. Somit kann das Verfahren die Umweltbedingung klassifizieren, also die Art der Umweltbedingung angeben. Auch hier bedeutet die t eine Zuordnung von mindestens einer Umweltbedingungsklasse, insbesondere genau einer Umweltbedingungsklasse, zu einer erkannten Umweltbedingung. Beispiele für Klassen sind Nebel, Schnee und Regen.

Die Klassifizierung der Umweltbedingung erfolgt insbesondere auf Basis der extrahierten Merkmale. Die extrahierten Merkmale können mit einem zuvor abgespeicherten Profil, in anderen Worten zuvor abgespeicherten Merkmalen, einer Umweltbedingung verglichen werden, wodurch die Zuordnung erfolgen kann.

Zusätzlich kann die Glätte eines Histogramms als Merkmal extrahiert werden. Bspw. kann die Glätte des Histogramms bzw. des Peaks als Merkmal relevant hinsichtlich der Klassifikation sein. Die Glätte beschreibt, inwieweit und in welchem Ausmaß Unebenheiten, in anderen Worten Rauschen, im Verlauf des jeweiligen Photonhistogramms bzw. des Peaks vorliegt, wobei die Unebenheiten wesentlich kleiner sind als der Peaks. Bei einem sehr glatten Histogramm bzw. Peak, d.h. mit sehr wenigen Unebenheiten, kann vor allem Nebel festgestellt werden, da die entsprechenden Histogramme bzw. Peaks aufgrund der hohen Homogenität des Nebels sehr glatt sind. Im Vergleich dazu sind Histogramme bzw. Peaks, die auf Regen zurückzuführen sind, unebener, in anderen Worten rauschbehafteter, da durch die Größe der Regentropfen keine Homogenität auf der Raumskala des Lichts der verwendeten Messpulse möglich ist. Analog sind die Unebenheiten der Histogramme bzw. Peaks hinsichtlich Schnee noch größer.

Es kann somit eingeschätzt werden, ob eine Erhöhung aufgrund von bspw. Nebel, Schnee oder Regen entstanden ist und somit eine Aussage über die Umweltbedingung getroffen werden. Ferner kann eine Aussage über die Stärke der Umweltbedingung getroffen werden, bspw. die Dichte von Nebel oder die Stärke von Regen.

Die Unterscheidung von Reflektionen an einem Objekt und von Reflektionen an einer Umweltbedingung und/oder die Klassifikation einer Umweltbedingung beruht darauf, dass Umweltbedingungen im Gegensatz zu Objekten und auch Umweltbedingungen untereinander eine charakteristische Form des Peaks verursachen. Peaks von Umweltbedingungen weisen vorzugsweise einen sehr breiten Peak am Anfang des Photonhistogramms mit einer exponentiell abfallen Flanke auf. Dies liegt daran, dass Photonen bereits sehr früh an Partikeln, bspw. Regentropfen, reflektiert werden.

Es kann somit durch eine Auswertung der Form des Peaks die Umweltbedingung klassifiziert und somit eine Aussage über die Art der Umweltbedingung getroffen werden. Auch beeinflusst die Stärke der Umweltbedingung die Verteilung und somit die Form des Peaks. Es kann somit basierend auf der Form des Peaks ausgesagt werden, ob eine Umweltbedingung vorliegt und ferner bevorzugt die Art und/oder die Stärke der Umweltbedingung. Ferner bevorzugt kann auf Basis der Position der Umweltbedingung im Photonhistogramm dieser eine Distanz zugeordnet werden.

Ferner können auch Peaks, die auf Rauschen, basieren, klassifiziert werden. Auch diese weisen eine charakteristische Form auf und können somit von Peaks von Objekten und Umweltbedingungen unterschieden werden. Beispielsweise führt sehr starke Sonneneinstrahlung zu einem Rauschboden, der das gesamte Histogramm betrifft. Bei der Unterscheidung von Objekten und Rauschen ist vor allem die Breite und Form der entsprechenden Peaks als Merkmale relevant. Peaks von Objekten haben typischerweise die Breite und Form eines Messpulses, während Rauschpeaks bei zeitlich invariantem Sonnenlicht auftreten und daher nur durch statistische Varianzen entstehen. Ihre Breite ist somit größer als die von Objektpeaks.

Insbesondere ist das Verfahren somit dazu geeignet sämtliche Peaks eines Photonhistogramms zu erkennen und die entsprechenden Targets, auf denen die Peaks beruhen, in Objekte und Umweltbedingungen einzuteilen und diese jeweils zu klassifizieren.

Insbesondere handelt es sich bei dem neuronalen Netzwerk nicht um ein Netzwerk vom Typ Long-Short-Term-Memory. LSTMs sind viel schwieriger zu trainieren als die vorgeschlagenen neuronalen Netzwerke oder GMM. Insbesondere beobachten sie Sensordaten über einen Zeitraum, der weit über ein Messintervall hinausgeht. Dies hat den Nachteil, dass, falls eine Umweltbedingung als "Störung" in allen Momentaufnahmen auftritt, dass LSTM diese nicht identifiziert, sondern auch wie ein Objekt zeitlich verfolgt. Somit sind LSTMs nicht in der Lage, weitere Informationen zu extrahieren, beispielsweise eine Aussage über eine Umweltbedingung. LSTM können somit nicht unterscheiden, ob es sich bei einem Target um ein Objekt oder eine Umweltbedingung handelt. LSTM sind daher nicht robust gegenüber Störungen, wie Umweltbedingungen, die in mehreren Frames regelmäßig auftreten, wie beispielsweise Nebel. Die vorliegende Erfindung kann diese anhand dessen Form im Histogramm erkennen und kann somit repetitive Störungen, wie Rauschen oder Umweltbedingungen, die über eine längere Zeit auftauchen, erkennen und klassifizieren.

Insbesondere sind das neuronale Netzwerk trainiert oder das GMM gefittet. Ferner kann das Verfahren das Training bzw. das Fitting umfassen.

Bei dem Training werden dem neuronalen Netzwerk Daten zur Verfügung gestellt. Die Daten können manuell bereits ausgewertet, in anderen Worten, gelabelt, worden sein. Dann wurde bereits eine Klasse einem Datensatz zugeordnet. Dies stellt die "Ground Truth" dar. Zum Ermitteln der Daten können in reellen Fahrsituationen auftretende Photonhistogramme erfasst, gesammelt und in einem manuellen Klassifizierungsschritt manuell klassifiziert werden, um auf Basis der erfassten Photonhistogramme und der manuell erhaltenen Klassifizierungen einen Satz an Trainingsdaten zu erzeugen. In einem weiteren Schritt kann das neuronale Netzwerk mit dem Trainingsdatensatz trainiert werden, um eine auf den entsprechenden Datensatz trainiertes neuronales Netzwerk zu erzeugen. Dabei kann sich der Datensatz auf Objekte beziehen, sodass das neuronale Netzwerk oder das GMM hinsichtlich der verschiedenen Objektklassen trainiert ist. Ferner kann der Datensatz auch Daten enthalten, die bei entsprechenden Umweltbedingungen, bspw. abhängig von deren Art und Stärke, aufgenommen wurden, sodass das neuronale Netzwerk auch hinsichtlich Umweltbedingungen trainiert wird. Es kann das neuronale Netzwerk oder das GMM auf die Umweltbedingungen, beispielsweise auf das Erkennen von Regen und/oder die Regenstärke und/oder auf das Erkennen von Nebel und/oder die Nebeldichte und/oder auf das Erkennen von Schnee und/oder die Schneestärke, trainiert sein.

Während des Trainingsprozesses wird dem neuronalen Netzwerk somit eine große Anzahl von Trainingsdaten präsentiert. Die entsprechenden Zuordnungen, das heißt Klassifizierungen, die manuell vorgenommen wurden, werden vom neuronalen Netzwerk gelernt und können dann bei dem Klassifizierungsprozess durch das neuronale Netzwerk verwendet werden. Dabei werden bei dem neuronalen Netzwerk die Merkmalsextraktion und die Klassifikation, d.h. die Klassifikationseinheit gemeinsam, d.h. in einem Schritt, gelernt. Es werden bevorzugt dem neuronalen Netzwerk die oben beschriebenen gelabelten Daten zur Verfügung gestellt, wobei die extrahierten Merkmale an die Klassifikationseinheit weiter gegeben werden. Auf Basis eines Vergleichs der zuvor vergebenen Klasse eines Datensatzes und der erzeugten Klasse werden die Gewichte des neuronalen Netzwerkes angepasst. Der Trainingsprozess umfasst vor allem eine Loss-Funktion.

Bei dem Lernen der neuronalen Netzwerke werden vor allem nicht-lineare Funktionen gelernt. In einem ersten Schritt findet insbesondere ein Forward-Pass der aktuellen Daten statt, wobei in einem zweiten Schritt eine Loss-Berechnung stattfindet. In einem dritten Schritt findet eine Gradientenberechnungund ein Backwards-Pass und somit eine Optimierung der verwendeten Gewichte statt.

Bei einem GMM werden die Funktionen des GMM gefittet, in anderen Worten deren Eigenschaften angepasst.

Das GMM wird insbesondere mit dem Expectation Maximum Ansatz gefittet. In einem ersten Schritt findet ein Expectation Step statt, in dem Datenpunkte geschätzt oder geraten werden, die nicht vorhanden sind. In einem zweiten Schritt, dem Maximization Step, werden die Variablen der Verteilung der Funktionen der GMM bestmöglichst angepasst, sodass sie der Verteilung, also der Form eines Peaks vorliegt, entsprechen. Das Fitting erfolgt vor allem unüberwacht. Die gefitteten Funktionen werden dann einer Klassifikationseinheit zur Verfügung gestellt, der anhand zuvor gelabelter Trainingsdaten trainiert wird.

Da künstliche neuronale Netze (ebenso wie biologisch neuronale Netzwerke) und das GMM über ein hohes Mustererkennungsvermögen verfügen, kann ein trainiertes künstliches neuronales Netzwerk auch bei widrigen Umweltbedingungen detektierte Objekte zuverlässig identifizieren. Außerdem kann das neuronale Netzwerk selbstständig erkennen, welche Umweltbedingung herrscht und dieses Ergebnis weiterleiten.

Ferner ist es auch möglich ist, Wahrscheinlichkeiten für eine oder mehrere Umweltbedingungen und/oder für eine oder mehrere Objektklasse anzugeben. Beispielsweise können einem Objekt mehrere Objektklassen zugeordnet werden mit einer entsprechenden Wahrscheinlichkeit, wie gut die entsprechende Klasse zutrifft. Gleiches gilt für die Umweltbedingung. Es kann einer erkannten Umweltbedingung mehrere mögliche Umweltbedingungsklassen, bspw. Regen, Schnee, Nebel, mit einer entsprechenden Wahrscheinlichkeit zugeordnet werden. Es kann beispielsweise ausgegeben werden, dass es sich bei der Umweltbedingung am wahrscheinlichsten um Regen handelt und am zweitwahrscheinlichsten um Schnee.

Ferner kann das Verfahren Aussagen über die Reflektivität des Objektes und den Winkel des Objektes ermitteln. Auch diese beiden Merkmale werden aus der Form der Peaks abgeleitet. Auch diese Informationen kann ein Training berücksichtigen.

Das Verfahren umfasst insbesondere ein Ermitteln und Zuordnen einer Distanz zu jedem erkannten Target, vor allem jedem erkannten Objekt und/oder zu jeder erkannten Umweltbedingung. So kann zum Beispiel einer Erhöhung, die beispielsweise auf einer bestimmten Umweltbedingung resultiert, eine Distanz zugeordnet werden. Ein Beispiel ist, dass sich in 100 m ein Objekt, beispielsweise ein Fahrzeug befindet, während sich in 50 m Nebel befindet. Der Nebel hat einen entsprechenden Peak im Photonhistogramm ausgelöst, der auf Basis des Verfahrens von der Detektion an einem Objekt unterschieden wurde, klassifiziert wurde und diesem eine Distanz zugeordnet wurde.

Insbesondere kann das Verfahren zur autonomen oder teilautonomen Steuerung von Fahrzeugen verwendet werden. Ferner kann das Verfahren im Rahmen einer Fahrerassistenz zum autonomen oder teilautonomen Fahren eingesetzt werden. Ferner kann das Verfahren im Rahmen der Verkehrsüberwachung eingesetzt werden. Dabei kann eine entsprechende Vorrichtung bspw. an einem Poller angeordnet sein.

Das Extrahieren und/oder die Klassifizierung werden insbesondere von einer Auswerteeinheit durchgeführt. Die Auswerteeinheit umfasst vor allem das neuronale Netzwerk oder das GMM. Die Auswerteeinheit kann unter Berücksichtigung der klassifizierten Objekte und/oder Umweltbedingungen ein entsprechendes Steuersignal an eine Steuereinheit des Fahrzeuges weitergeben. Ferner können die zu den Objekten und/oder Umweltbedingungen ermittelten Distanzen berücksichtigt werden. Beispielweise kann bei dem Erkennen einer bestimmten Umweltbedingung, bspw. Nebel mit hoher Dichte, das Nebellicht automatisch aktiviert werden und/oder ein automatisch langsameres Fahren bspw. bei Regen und/oder ein automatisches Bremsen durchgeführt werden.

Die Steuereinheit umfasst insbesondere mehrere Module, bspw. ein Steuermodul für das Bremssystem, ein Steuermodul für einen Antriebsstrang, ein Steuermodul für das Lenksystem des Fahrzeuges und ein Steuermodul für autonomes Fahren. Es kann somit das Bremssystem, der Antriebsstrang und/oder das Lenksystem auf Basis der Informationen der Auswerteeinheit gesteuert werden.

Gerade für die Anwendung im Bereich des autonomen Fahrens ist eine präzise Umfelderkennung wichtig ist, wobei das vorliegende Verfahren beziehungsweise die Vorrichtung entsprechende zuverlässige Daten liefern kann, auf dem entsprechende Steuersignale basieren können.

In einem weiteren Aspekt umfasst die Erfindung eine Vorrichtung zur Klassifizierung von Targets, wobei die Vorrichtung einen Sensor mit mehreren Empfangselementen und eine Auswerteeinheit mit einem neuronalen Netzwerk oder einem GMM umfasst, wobei es sich bei dem neuronalen Netzwerk um ein FCN oder CNN handelt. Das neuronale Netzwerk oder das GMM ist dazu ausgebildet, Merkmale aus Messdaten mehrerer Empfangselemente des Sensors zu extrahieren, wobei es sich bei den Messdaten der Empfangselemente des Sensors um einen Abschnitt oder mehrere Abschnitte eines jeweiligen Photonhistogramms handelt, wobei jedes Photonhistogramm als eindimensionaler Array ausgebildet ist.

Erfindungsgemäß ist die Vorrichtung zur Durchführung des oben beschriebenen Verfahrens ausgebildet. Insbesondere umfasst die Auswerteeinheit eine Recheneinheit wie bspw. Hardwarebeschleuniger, die auf Basis des neuronalen Netzwerkes oder des GMM dazu ausgebildet ist, die oben beschriebenen Schritte des Verfahrens durchzuführen, insbesondere Merkmale zu extrahieren und/oder Targets, vor allem Objekte und Umweltbedingungen zu klassifizieren und/oder eine Aussage über eine Umweltbedingung zu treffen. Ferner kann die Auswerteeinheit einen Speicher und eine Eingabe/ Ausgabe-Schnittstelle umfassen.

In einem weiteren von der beanspruchten Erfindung nicht abgedeckten Aspekt betrifft die Offenbarung ein Fahrzeug mit einer erfindungsgemäßen Vorrichtung und vorzugsweise einer zuvor beschriebenen Steuereinheit. Ferner kann das Fahrzeug eine Benutzerschnittstelle umfassen, die eine elektronische Anzeige enthalten kann, bspw. zum Anzeigen der ermittelten Aussage über eine Umweltbedingung.

Ferner umfasst die Erfindung ein Computerprogrammprodukt, das ein computerlesbares Speichermedium umfasst, auf dem ein Programm gespeichert ist, dass es einem Computer ermöglicht, nachdem es in den Speicher des Computers geladen worden ist, ein oben beschriebenes Verfahren, in Zusammenspiel mit einer oben beschriebenen Vorrichtung, durchzuführen.

Zudem betrifft die Erfindung ein computerlesbares Speichermedium, auf dem ein Programm gespeichert ist, das es einem Computer ermöglicht, nachdem es in den Speicher des Computers geladen worden ist, ein oben beschriebenes Verfahren in Zusammenspiel mit einer oben beschriebenen Vorrichtung, durchzuführen.

### Kurze Beschreibung der Figuren

Es zeigen in rein schematischer Darstellung:
- Figur 1:: ein Verfahrensschema eines erfindungsgemäßen Verfahrens;
- Figur 2:: eine erfindungsgemäße Vorrichtung;
- Figur 3:: ein Blockdiagramm hinsichtlich der Konfiguration eines Fahrzeugs mit einer erfindungsgemäßen Vorrichtung;
- Figur 4:: ein Photonhistogramm als eindimensionaler Array; und
- Figur 5:: ein Photonhistogramm als 2D-Bild.

### Bevorzugte Ausführungsformen der Erfindung

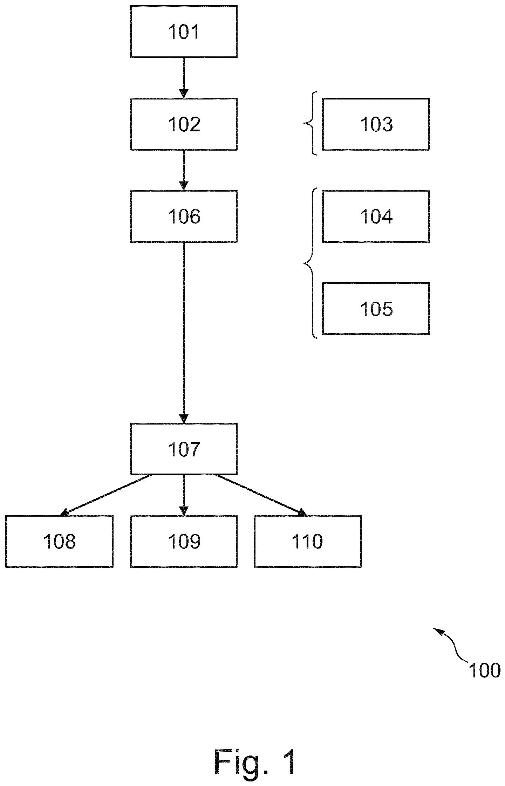

Figur 1 zeigt ein erfindungsgemäßes Verfahren 100 zur Klassifizierung von Targets. Das Verfahren 100 umfasst vorzugsweise das Durchführen 101 von Lichtlaufzeitmessungen mittels eines Sensors 11. Es kann ein Photonhistogramm 40 erstellt werden 102, und zwar basierend auf den Lichtlaufzeitmessungen. Hierfür kann das Verfahren eine zeitkorrelierte Einzelphotonenzählung 103 umfassen.

Das Verfahren umfasst weiter das Bereitstellen 106 der Messdaten für ein neuronales Netzwerk 14a, und zwar ein CNN oder ein FCN, oder ein GMM 14b. Das Bereitstellen 106 kann das Umwandeln 104 des Photonhistogramms 40 von einem eindimensionalen Array 41 in ein 2D-Bild 44 umfassen. Ferner wird das Photonhistogramm 40 als eindimensionaler Array 41 bereitgestellt 106. Es umfasst das Bereitstellen 106 die Auswahl 105 eines Abschnitts des Photonhistogramms 40. Der Abschnitt umfasst ein Peak 45.

Das Verfahren umfasst das Extrahieren 107 von Merkmalen auf Basis des Photonhistogramms 40 mittels des neuronalen Netzwerkes 14a oder des GMM 14b. Ferner umfasst das Verfahren das Klassifizieren 108 von Targets basierend auf den zuvor extrahierten Merkmalen. Basierend auf den extrahierten Merkmalen kann das Verfahren 100 das Ermitteln 109 einer Aussage über eine Umweltbedingung umfassen. Ferner kann das Verfahren auf Basis der extrahierten Merkmale das Ermitteln und Zuordnen 110 einer Distanz zu jedem erkannten Target umfassen.

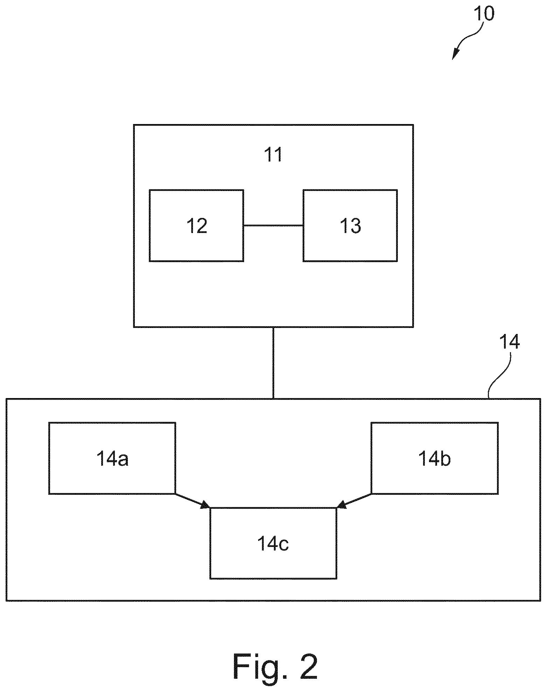

Figur 2 zeigt eine erfindungsgemäße Vorrichtung 10, die einen Sensor 11 mit mehreren Empfangselementen umfasst. Der Sensor 11 umfasst eine Empfangseinheit 13 mit den Empfangselementen sowie eine Sendeeinheit 12 mit Sendeelementen. Ferner umfasst die Vorrichtung 10 ein neuronales Netzwerk 14a oder ein GMM 14b, wobei sich diese auf einer Auswerteeinheit 14 befinden. Das neuronale Netzwerk 14a oder das GMM 14b ist dazu ausgebildet, Merkmale aus Messdaten des Sensors 11 zu extrahieren, wobei es sich bei den Messdaten um zumindest einen Abschnitt eines Photonhistogramms 40 handelt. Ferner umfasst die Auswerteeinheit 14 eine Klassifikationseinheit 14c, die basierend auf den extrahierten Merkmalen Objekte und Umweltbedingungen klassifiziert.

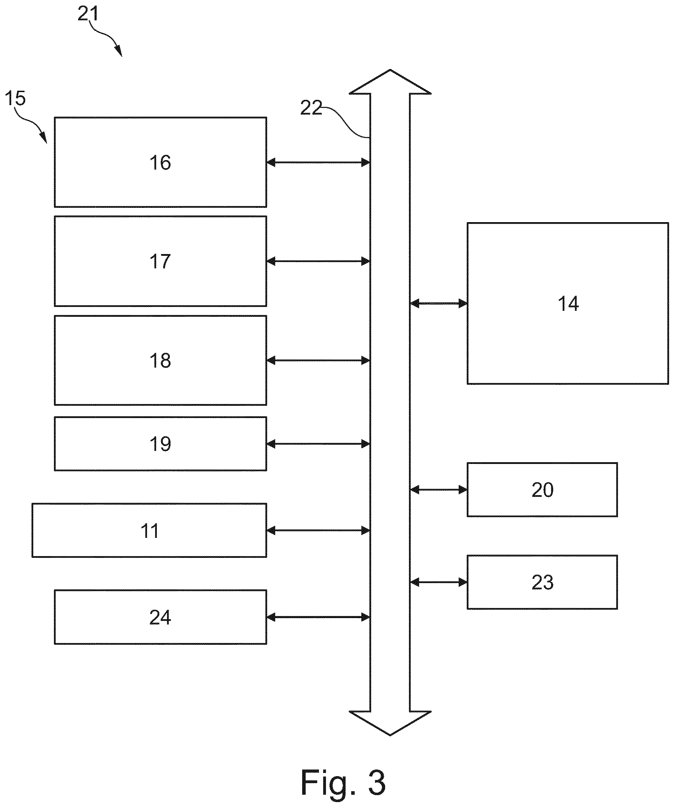

Figur 3 zeigt ein Blockdiagramm hinsichtlich der Konfiguration eines Fahrzeugs 21 mit einer erfindungsgemäßen Vorrichtung 10. In anderen Worten zeigt Figur 3 die Einbindung der Vorrichtung 10 in ein Fahrzeug 21.

Das Fahrzeug 21 umfasst mehrere elektronische Komponenten, welche via eines Fahrzeugkommunikationsnetzwerks 22 miteinander verbunden sind. Das Fahrzeugkommunikationsnetzwerk 22 kann beispielsweise ein im Fahrzeug eingebautes standardgemäßes Fahrzeugkommunikationsnetzwerk wie etwa ein CAN-Bus sein.

Das Fahrzeug 10 umfasst eine Steuereinheit 15, die mehrere Module umfasst, und zwar ein Steuermodul 16 für das Bremssystem, ein Steuermodul 17 für einen Antriebsstrang, und ein Steuermodul 19 für das Lenksystem des Fahrzeuges 21 und ein Steuermodul 18 für autonomes Fahren.

Das Fahrzeug umfasst eine Vorrichtung 10, nämlich einen Sensor und eine Auswerteeinheit, die eine Umfeldklassifizierung vornehmen kann, die es beispielsweise einer Steuereinheit für autonomes Fahren ermöglicht, das Klassifizierungsergebnis bei ihrer Entscheidungsfindung hinsichtlich der Steuerung des Fahrzeuges 21 zu berücksichtigen. Die Auswerteeinheit 14 ist dazu ausgebildet, basierend auf den Ergebnissen der Klassifikationseinheit 14c der Steuereinheit 15 Steuersignale weiterzuleiten.

Weiterhin umfasst das Fahrzeug 10 eine Funkkommunikationsschnittstelle 23, hier insbesondere eine Mobilfunkkommunikationsschnittstelle, die nach dem LTE/UMTS-Standard ausgebildet ist, und die es der Auswerteeinheit 14 ermöglicht, mit externen Diensten wie einem Cloud-Dienst, insbesondere einem Navigationsdienst und hier insbesondere mit einer externen Notrufleitstelle zu kommunizieren. Hierfür umfasst die Mobilfunkkommunikationsschnittstelle beispielsweise ein Subscriber Identity Module (SIM), mittels dessen sich das Fahrzeug an einem Mobilfunknetz anmelden kann, so dass eine Kommunikation über das Mobilfunknetz, insbesondere eine Notrufleitstelle, möglich wird (soweit ein Mobilfunknetz die Kommunikation mit der Notrufnummer nicht bereits ohne SIM-Authentifizierung erlaubt).

Das Fahrzeug 10 umfasst darüber hinaus eine Satellitennavigationseinheit 24 zur Erfassung der Position des Fahrzeugs 21.

Das Fahrzeug 10 umfasst ferner eine Benutzerschnittstelle 20, die einem Fahrzeuginsassen ermöglicht, mit einem oder mehreren Fahrzeugsystemen in Interaktion zu stehen. Diese Benutzerschnittstelle 20 kann eine elektronische Anzeige zum Ausgeben einer Graphik, von Symbolen und/oder Inhalt in Textform, und eine Eingabeschnittstelle zum Empfangen einer Eingabe (beispielsweise manuelle Eingabe, Spracheingabe und Eingabe durch Gesten, Kopf- oder Augenbewegungen) umfassen. Die Eingabeschnittstelle kann beispielsweise Tastaturen, Schalter, berührungsempfindliche Bildschirme (Touchscreen), Eye-Tracker und dergleichen umfassen.

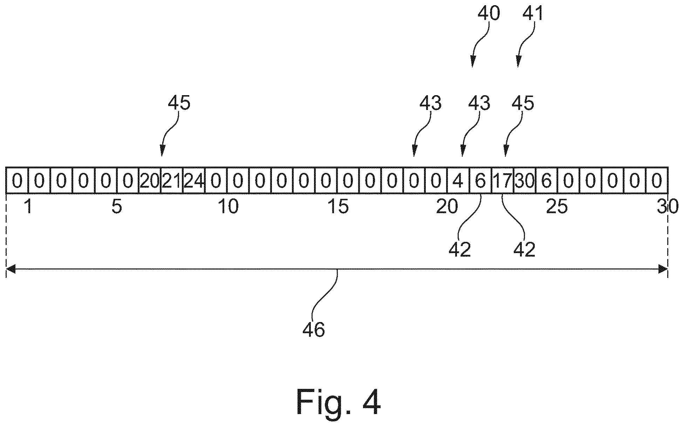

Figur 4 zeigt ein beispielhaftes Photonhistogramm 40, das von einem Empfangselement erhalten wurde und das als eindimensionaler Array 41 ausgebildet ist. Es umfasst Bins 42, hier beispielhaft 30 Stück, in denen die Detektionen 43 eingetragen sind, die innerhalb eines definierten Messintervalls 46 detektiert wurden. Der Messintervall 46 kann einem Abstandsmessbereich zugeordnet werden. Das Photonhistogramm wurde beispielhaft in einem Messintervall 46 von einer zehntel Sekunde ermittelt. Der Abstandsmessbereich ist in dreißig Bins (n = 1 ... 30) aufgeteilt, die im Histogramm der Figur 4 auf der X-Achse aufgetragen sind und von 1 bis 30 durchnummeriert sind. Jedes Bin entspricht einem vordefinierten Entfernungsbereich. Beispielhaft sei angenommen, dass der Abstandsmessbereich den Entfernungsbereich von 0 bis 90 m abdeckt und die Bins äquidistant eingerichtet sind. In diesem beispielhaften Fall entspricht jedes Bin einem Entfernungsbereich von 3 m.

In dem jeweiligen Bin sind die Anzahl der Detektionen für den Messintervall 46 als Zahlen eingetragen. Beispielsweise haben in Bin 21, das bspw. einer Entfernung von 60 bis 63 m entspricht, 4 Detektionen, in Bin 22 6 Detektionen, in Bin 23 17 Detektionen, in Bin 24 30 Detektionen und in Bin 25 6 Detektionen stattgefunden. Die Bins 21 bis 25 definieren somit einen Peak 45 mit einem Maximum bei Bin 24, das hier einer Entfernung von 69 bis 72 m entspricht. Ferner haben in Bin 7 20 Detektionen, in Bin 8 21 Detektionen und in Bin 9 24 Detektionen stattgefunden. Dies definiert einen weiteren Peak 45. Das neuronale Netzwerk 14a beziehungsweise das GMM 14b ist dazu ausgebildet, Peaks 45 zu detektieren und dessen Form auszuwerten.

Die Anzahl der Detektionen pro Bin gibt die Intensität des reflektierten Signals im jeweiligen Entfernungsbereich wieder. Im Photonhistogramm der Fig. 4 ist ersichtlich, dass sich im Sichtfeld des Empfangselementes ein erstes Target befindet, das in den Bins 21 bis 25 Messereignisse liefert, mit einem Maximum bei Bin 24, was auf eine Entfernung des detektierten Targets von ca. 71 m rückschließen lässt. Der Peak 45 zeigt eine charakteristische Gestalt für ein Objekt, sodass geschlossen werden kann, dass es sich bei dem Target um ein Objekt handelt. Ferner lässt sich auf Basis des Peaks 45 in den Bins 7 bis 9 darauf schließen, dass sich im Sichtfeld des Empfangselementes Nebel befindet. In anderen Worten kann das Target, dass für den Peak verantwortlich wird, als Nebel klassifiziert werden. Der Nebel befindet sich in einem Abstand von etwa 21 bis 27 m. Dies kann aus der Form des Peaks 45 ermittelt werden. Es kann daher eine Aussage über eine Umweltbedingung getroffen werden.

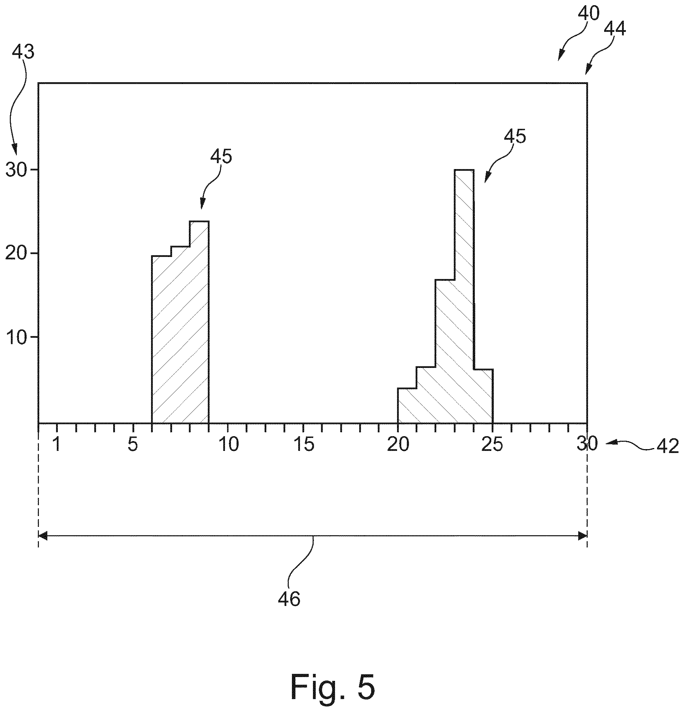

Figur 5 zeigt ebenfalls das Photonhistogramm 40 der Figur 4, allerdings in Form eines 2D-Bildes 44. Statt den entsprechenden Detektionen in Form von Zahlen wie in Figur 4 sind an den Stellen der entsprechenden Bins die Werte als Säulen in Y-Richtung dargestellt. Somit handelt es sich um ein zweidimensionales Bild 44. Erneut sind die beiden Peaks 45 zu sehen. Anhand der Form des Peaks kann auf Basis des vorliegenden Verfahrens festgestellt werden, dass der hintere Peak mit einem Maximum in Bin 24 auf der Reflektion an einem Objekt basiert, während der vordere Peak von einer Reflektion an Nebel stammt. Somit können auf Basis der Formen der einzelnen Peaks die erkannten Targets klassifiziert werden, selbst wenn es sich bei diesen um Umweltbedingungen handelt.

### Beispiele eines neuronalen Netzwerkes

Beispielhaft ist die Architektur eines ein CNN Netzwerkes gezeigt, das eindimensionalen Input bearbeitet und die Distanz eines Targets auswertet:
- Convolution Layer 1:
   ∘ Input shape: 2016x1
   ∘ Initialization: Xavier
   ∘ Kernelsize: 5x1
   o Stride:0
   ∘ Padding: zero padding
   ∘ Featuremap out: 2007x16
   ∘ Activation: ReLU
- Max Pooling
   ∘ Kernelsize: 2x1
   ∘ Stride:0
   ∘ Output Shape: 1003x16
- Convolution Layer 2:
   ∘ Input Shape: 1003x16
   ∘ Initialization: Xavier
   ∘ Kernelsize: 5x1
   ∘ Stride:0
   ∘ Padding: zero padding
   ∘ Featuremap out: 999x32
   ∘ Activation: ReLU
- Max Pooling
   ∘ Kernelsize: 2x1
   ∘ Stride:0
   ∘ Output Shape: 499x32
- Convolution Layer 3:
   ∘ Initialization: Xavier
   ∘ Kernelsize: 5x1
   ∘ Stride:0
   ∘ Padding:zero padding
   ∘ Featuremap out: 497x64
   ∘ Activation: ReLU
- Max Pooling
   ∘ Kernelsize: 2x1
   ∘ Stride:0
   ∘ Output Shape: 248x64
- Fully connected layer:
   ∘ Input Shape: 15872x1
   ∘ Initialization: Xavier
   ∘ Size: 50
   ∘ Activation: ReLU
- Dropout
   ∘ Doropout rate: 0.3
- Fully connected layer:
   ∘ Input Shape: 50x1
   ∘ Size: 1
   ∘ Activation: none

### Bezugszeichenliste

- 100: Verfahren
- 101: Durchführen von Lichtlaufzeitmessungen mittels eines Sensors
- 102: Erstellen eines Photonhistogramms basierend auf den Lichtlaufzeitmessungen
- 103: zeitkorrelierte Einzelphotonenzählung
- 104: Umwandeln des Photonhistogramms in ein 2D-Bild
- 105: Auswahl eines Abschnitts des Photonhistogramms
- 106: Bereitstellen der Messdaten für ein neuronale Netzwerk oder ein GMM
- 107: Extrahieren von Merkmalen aus Messdaten eines oder mehrerer Empfangselemente des Sensors mittels des neuronalen Netzwerkes oder mittels des GMM
- 108: Klassifizieren von Targets basierend auf den zuvor extrahierten Merkmalen
- 109: Ermitteln einer Aussage über eine Umweltbedingung
- 110: Ermitteln und Zuordnen einer Distanz zu jedem erkannten Target

- 10: Vorrichtung
- 11: Sensor
- 12: Sendeeinheit
- 13: Empfangseinheit
- 14: Auswerteeinheit
- 14a: neuronales Netzwerk
- 14b: GMM
- 14c: Klassifikationseinheit
- 15: Steuereinheit
- 16: Steuermodul für Bremssystem
- 17: Steuermodul für Antriebsstrang
- 18: Steuermodul für autonomes Fahren
- 19: Steuermodul für Lenksystem

- 20: Benutzerschnittstelle
- 21: Fahrzeug
- 22: Fahrzeugkommunikationsnetzwerk
- 23: Funkkommunikationsschnittstelle
- 24: Satellitennavigationseinheit

- 40: Photonhistogramm
- 41: 1D Array
- 42: Bin
- 43: Detektionen
- 44: 2D-Bild
- 45: Peak
- 46: Messintervall

## Patentansprüche

1. Computerimplementiertes Verfahren (100) zur Klassifizierung von Targets, wobei das Verfahren (100) das Extrahieren (107) von Merkmalen aus Messdaten mehrerer Empfangselemente eines Sensors (11) mittels eines neuronalen Netzwerkes (14a) oder mittels eines Gaussian Mixture Models (GMM; 14b) umfasst,
wobei es sich bei den Messdaten jedes Empfangselementes des Sensors (11) um einen Abschnitt oder mehrere Abschnitte eines jeweiligen Photonhistogramms (40) handelt,
wobei jedes Photonhistogramm (40) als eindimensionaler Array (41) ausgebildet ist,
wobei es sich bei dem neuronalen Netzwerk (14a) um ein fully connected neuronales Netzwerk (FCN) oder ein convolutional neuronales Network (CNN) handelt,
wobei das Verfahren (100) ein Bereitstellen (106) der Messdaten für das neuronale Netzwerk (14a) oder das Gaussian Mixture Model (GMM; 14b) umfasst, wobei das Verfahren eine Auswahl des Abschnittes oder der mehreren Abschnitte des jeweiligen Photonhistogramms pro Messintervall und pro Empfangselement umfasst,
wobei für jeden Peak des jeweiligen Photonhistogramms ein Abschnitt des jeweiligen Photonhistogramms bereitgestellt wird, sodass jeder Abschnitt aus einem Peak (45) besteht,
und
wobei das Verfahren (100) ein Klassifizieren (108) der Targets basierend auf den zuvor extrahierten Merkmalen umfasst,
wobei die zuvor extrahierten Merkmale Formen der Peaks der Photonhistogramme beschreiben.

2. Verfahren (100) nach Anspruch 1,
wobei es sich bei dem Sensor (11) um einen solid State Lidar-Sensor handelt,
wobei das Verfahren (100) ein Durchführen (101) von Lichtlaufzeitmessungen für mindestens ein definiertes Messintervall (46) mittels des Sensors (11) umfasst,
wobei das Verfahren (100) ein Erstellen (102) eines jeweiligen Photonhistogramms (40) pro Messintervall (46) basierend auf den Lichtlaufzeitmessungen umfasst.

3. Verfahren (100) nach einem der Ansprüche 1 oder 2,
wobei das Verfahren (100) ein Umwandeln (104) der jeweiligen Photonhistogramme (40) von einem eindimensionalen Array (41) in ein 2D-Bild (44) umfasst.

4. Verfahren (100) nach Anspruch 1,
wobei das Klassifizieren (108) mittels eines weiteren neuronalen Netzwerkes erfolgt,
wobei das weitere neuronale Netzwerk als fully connected neuronales Netzwerk (FCN) ausgebildet ist.

5. Verfahren (100) nach einem der vorangehenden Ansprüche,
wobei das Verfahren (100) ein Ermitteln (109) einer Aussage über eine Umweltbedingung umfasst.

6. Verfahren (100) nach Anspruch 5,
wobei die Aussage das Vorliegen der Umweltbedingung und/oder die Art der Umweltbedingung und/oder die Stärke der Umweltbedingung betrifft.

7. Verfahren (100) nach einem der vorangehenden Ansprüche,
wobei das Verfahren (100) ein Ermitteln und Zuordnen (110) einer Distanz zu jedem erkannten Target, vor allem jedem erkannten Objekt und/oder jeder erkannten Umweltbedingung, umfasst.

8. Vorrichtung (10) zur Klassifizierung von Targets,
wobei
die Vorrichtung (10) einen Sensor (11) mit mehreren Empfangselementen und eine Auswerteeinheit mit einem neuronalen Netzwerk (14a) oder einem Gaussian Mixture Model (GMM; 14b) umfasst,
wobei es sich bei dem neuronalen Netzwerk (14a) um ein fully connected neuronales Netzwerk (FCN) oder ein convolutional neuronales Network (CNN) handelt,
wobei das neuronale Netzwerk (14a) oder das Gaussian Mixture Model (14b) dazu ausgebildet ist Merkmale aus Messdaten mehrerer Empfangselemente des Sensors (11) zu extrahieren,
wobei es sich bei den Messdaten der Empfangselemente des Sensors (11) um einen Abschnitt oder mehrere Abschnitte eines jeweiligen Photonhistogramms (40) handelt,
wobei jedes Photonhistogramm (40) als eindimensionaler Array (41) ausgebildet ist,
wobei die Vorrichtung zur Durchführung eines Verfahrens nach einem der Ansprüche 1 bis 7 ausgebildet ist.

9. Computerprogrammprodukt, das ein computerlesbares Speichermedium umfasst, auf dem ein Programm gespeichert ist, das es einem Computer ermöglicht, nachdem es in den Speicher des Computers geladen worden ist, ein Verfahren (100) gemäß einem der Ansprüche 1 bis 7 im Zusammenspiel mit einer Vorrichtung (10) gemäß Anspruch 8 durchzuführen.

10. Computerlesbares Speichermedium, auf dem ein Programm gespeichert ist, das es einem Computer ermöglicht, nachdem es in den Speicher des Computers geladen worden ist, ein Verfahren gemäß einem der Ansprüche 1 bis 7 im Zusammenspiel mit einer Vorrichtung (10) gemäß Anspruch 8 durchzuführen.

## Claims

1. Computer-implemented method (100) for classifying targets,
wherein the method (100) comprises extracting (107) features from measurement data of a plurality of receiving elements of a sensor (11) by means of a neural network (14a) or by means of a Gaussian Mixture Model (GMM; 14b),
wherein the measurement data of each receiving element of the sensor (11) is a section or several sections of a respective photon histogram (40),
wherein each photon histogram (40) is formed as a one-dimensional array (41), wherein the neural network (14a) is a fully connected neural network (FCN) or a convolutional neural network (CNN),
wherein the method (100) comprises providing (106) the measurement data to the neural network (14a) or the Gaussian Mixture Model (GMM; 14b),
wherein the method comprises selecting the section or multiple sections of the respective photon histogram per measurement interval and per receiving element,
wherein a section of the respective photon histogram is provided for each peak of the respective photon histogram, so that each section consists of a peak (45),
and
wherein the method (100) comprises classifying (108) the targets based on the previously extracted features,
wherein the previously extracted features describe shapes of the peaks of the photon histograms.

2. The method (100) according to claim 1,
wherein the sensor (11) is a solid state lidar sensor,
wherein the method (100) comprises performing (101) time-of-flight measurements for at least one defined measurement interval (46) by means of the sensor (11),
wherein the method (100) comprises generating (102) a respective photon histogram (40) per measurement interval (46) based on the time-of-flight measurements.

3. The method (100) according to one of claims 1 or 2,
wherein the method (100) comprises converting (104) the respective photon histograms (40) from a one-dimensional array (41) into a 2D image (44).

4. The method (100) according to claim 1,
wherein the classification (108) is carried out by means of another neural network,
wherein the other neural network is formed as a fully connected neural network (FCN).

5. The method (100) according to one of the preceding claims,
wherein the method (100) comprises determining (109) a statement of an environmental condition.

6. The method (100) according to claim 5,
wherein the statement concerns the presence of the environmental condition and/or the nature of the environmental condition and/or the strength of the environmental condition.

7. The method (100) according to one of the preceding claims,
wherein the method (100) comprises determining and assigning (110) a distance to each detected target, in particular each detected object and/or each detected environmental condition.

8. A device (10) for classifying targets,
wherein
the device (10) comprises a sensor (11) with several receiving elements and an evaluation unit with a neural network (14a) or a Gaussian Mixture Model (GMM; 14b),
wherein the neural network (14a) is a fully connected neural network (FCN) or a convolutional neural network (CNN),
wherein the neural network (14a) or the Gaussian Mixture Model (14b) is formed to extract features from measurement data of several receiving elements of the sensor (11),
wherein the measurement data of the receiving elements of the sensor (11) is a section or several sections of a respective photon histogram (40),
wherein each photon histogram (40) is formed as a one-dimensional array (41), wherein the device is formed to carry out a method according to one of claims 1 to 7.

9. A computer program product comprising a computer-readable storage medium on which is stored a program which, after having been loaded into the memory of the computer, enables a computer to perform a method (100) according to one of claims 1 to 7 in cooperation with a device (10) according to claim 8.

10. A computer-readable storage medium on which is stored a program which, after having been loaded into the memory of the computer, enables a computer to perform a method according to one of claims 1 to 7 in cooperation with a device (10) according to claim 8.

## Revendications

1. Procédé mis en œuvre par ordinateur (100) de classification de cibles,
dans lequel le procédé (100) comprend l'extraction (107) de caractéristiques à partir de données de mesure de plusieurs éléments de réception d'un capteur (11) au moyen d'un réseau neuronal (14a) ou au moyen d'un GMM [Gaussian Mixture Model - modèle de mélange gaussien] (14b),
dans lequel les données de mesure de chaque élément de réception du capteur (11) sont une section ou plusieurs sections d'un histogramme de photons (40) respectif,
dans lequel chaque histogramme de photons (40) est réalisé comme un réseau unidimensionnel (41),
dans lequel le réseau neuronal (14a) est un réseau neuronal FCN [fully connected network - réseau entièrement connecté] ou un CNN [convolutional neuronal network - réseau neuronal convolutif],
dans lequel le procédé (100) comprend une fourniture (106) des données de mesure pour le réseau neuronal (14a) ou le GMM (14b),
dans lequel le procédé comprend une sélection de la section ou des plusieurs sections de l'histogramme de photons respectif par intervalle de mesure et par élément de réception,
dans lequel une section de l'histogramme de photons respectif est fournie pour chaque pic de l'histogramme de photons respectif si bien que chaque section est constituée d'un pic (45)
et
dans lequel le procédé (100) comprend une classification (108) des cibles sur la base des caractéristiques extraites au préalable,
dans lequel les caractéristiques extraites au préalable décrivent des formes des pics des histogrammes de photons.

2. Procédé (100) selon la revendication 1,
dans lequel le capteur (11) est un capteur lidar à semi-conducteurs,
dans lequel le procédé (100) comprend une mise en œuvre (101) de mesures de temps de propagation de la lumière pour au moins un intervalle de mesure (46) défini au moyen du capteur (11),
dans lequel le procédé (100) comprend une création (102) d'un histogramme de photons (40) respectif par intervalle de mesure (46) sur la base des mesures de temps de propagation de la lumière.

3. Procédé (100) selon l'une quelconque des revendications 1 ou 2,
dans lequel le procédé (100) comprend une conversion (104) des histogrammes de photons (40) respectifs d'un réseau unidimensionnel (41) en une image 2D (44).

4. Procédé (100) selon la revendication 1,
dans lequel la classification (108) est effectuée au moyen d'un autre réseau neuronal,
dans lequel l'autre réseau neuronal est réalisé comme un réseau neuronal FCN.

5. Procédé (100) selon l'une quelconque des revendications précédentes,
dans lequel le procédé (100) comprend une détermination (109) d'une déclaration concernant une condition extérieure.

6. Procédé (100) selon la revendication 5,
dans lequel la déclaration concerne la présence de la condition extérieure et/ou le type de la condition extérieure et/ou l'intensité de la condition extérieure.

7. Procédé (100) selon l'une quelconque des revendications précédentes,
dans lequel le procédé (100) comprend une détermination et une association (110) d'une distance à chaque cible identifiée, avant tout à chaque objet identifié et/ou à chaque condition extérieure identifiée.

8. Dispositif (10) de classification de cibles,
dans lequel
le dispositif (10) comprend un capteur (11) avec plusieurs éléments de réception et une unité d'évaluation avec un réseau neuronal (14a) ou un GMM (14b), dans lequel le réseau neuronal (14a) est un réseau neuronal FCN ou un réseau CNN,
dans lequel le réseau neuronal (14a) ou le GMM (14b) est réalisé pour extraire des caractéristiques à partir de mesures de données de plusieurs éléments de réception du capteur (11),
dans lequel les données de mesure des éléments de réception du capteur (11) sont une section ou plusieurs sections d'un histogramme de photons (40) respectif,
dans lequel chaque histogramme de photons (40) est réalisé comme un réseau unidimensionnel (41),
dans lequel le dispositif est réalisé pour mettre en œuvre un procédé selon l'une quelconque des revendications 1 à 7.

9. Produit de programme d'ordinateur, qui comprend un support de stockage lisible par ordinateur, sur lequel est mémorisé un programme, qui permet à un ordinateur, après avoir été téléchargé dans la mémoire de l'ordinateur, de mettre en œuvre un procédé (100) selon l'une quelconque des revendications 1 à 7 en conjonction avec un dispositif (10) selon la revendication 8.

10. Support de stockage lisible par ordinateur, sur lequel est mémorisé un programme, qui permet à un ordinateur, après avoir été téléchargé dans la mémoire de l'ordinateur, de mettre en œuvre un procédé selon l'une quelconque des revendications 1 à 7 en conjonction avec un dispositif (10) selon la revendication 8.
